# EUROPÄISCHE PATENTSCHRIFT

(11) **EP 0 670 048 B1**
(45) Veröffentlichungstag und Bekanntmachung des Hinweises auf die Patenterteilung: **11.11.1998**
(21) Anmeldenummer: 94928790.8
(22) Anmeldetag: 20.09.1994
(51) Int. Cl.: G01S 7/40, G01S 13/88, G01F 23/284

(54) **VERFAHREN ZUR FÜLLSTANDSMESSUNG NACH DEM RADARPRINZIP**
LEVEL MEASUREMENT PROCESS BASED ON THE RADAR PRINCIPLE
PROCEDE DE MESURE DE NIVEAU FONDE SUR LE PRINCIPE DU RADAR

(30) Priorität: 21.09.1993 DE 4332071
(43) Veröffentlichungstag der Anmeldung: 06.09.1995
(73) Patentinhaber: Endress + Hauser GmbH + Co., 79689 Maulburg (DE)
(72) Erfinder: OTTO, Johanngeorg, D-79688 Hausen (DE); BURGER, Stefan, D-79108 Freiburg (DE); GERST, Peter, D-76189 Karlsruhe (DE)
(74) Vertreter: Leiser, Gottfried, Dipl.-Ing.
(86) Internationale Anmeldenummer: EP9403136
(87) Internationale Veröffentlichungsnummer: WO9508780

(56) Entgegenhaltungen:
- WO-A-92/14124
- DE-A- 3 304 223
- GB-A- 2 083 312

## Beschreibung

Die Erfindung betrifft ein Verfahren zur Füllstandsmessung nach dem Radarprinzip, bei welchem mittels einer Antenne Mikrowellen zur Oberfläche eines Füllguts ausgesendet und die an der Oberfläche reflektierten Echowellen empfangen werden, für jede Messung aus den von der Antenne empfangenen Echowellen eine die Echoamplituden als Funktion der Entfernung darstellende aktuelle Echofunktion gebildet wird, aus der aktuellen Echofunktion das wahrscheinliche Nutzecho und dessen Laufzeit ermittelt wird und daraus der Abstand der FüllgutOberfläche von der Antenne bestimmt wird.

Zur Füllstandsmessung nach dem Radarprinzip können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar). Beim Pulsradar werden periodisch kurze Mikrowellen-Sendeimpulse ausgesendet, die von dem zu messenden Objekt reflektiert und nach einer abstandsabhängigen Laufzeit wieder empfangen werden. Die empfangene Signalamplitude über der Zeit stellt die Echofunktion dar. Jeder Wert dieser Echofunktion entspricht der Amplitude eines in einem bestimmten Abstand von der Antenne reflektierten Echos. Bei dem FMCW-Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werde kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall die Echofunktion dar. Es ist bekannt, die gesamte im Verlauf eines Meßzyklus erhaltene Echofunktion zu speichern und dann die gespeicherte Echofunktion zur Ermittlung des Nutzechos und zur Bestimmung der Laufzeit des Nutzechos durch einen Computer nach einem vorgegebenen Programm auszuwerten. Die Speicherung der Echofunktion erfolgt in diesem Fall vorzugsweise in digitalisierter Form, indem die Echofunktion periodisch abgetastet wird, jeder Abtastwert durch einen Analog-Digital-Umsetzer in eine digitale Codegruppe umgesetzt wird und die digitalen Codegruppen in einen Arbeitsspeicher des Computers eingeschrieben werden.

Ein besonderes Problem bei der Füllstandsmessung mit Mikrowellen besteht darin, daß sich an der Antenne ein Ansatz von Füllgut bilden kann. Diese Gefahr besteht besonders bei staub- oder pulverförmigen Füllgütern, insbesondere wenn die Antenne feucht wird, sowie bei klebrigen, zähflüssigen, spritzenden und gerührten Füllgütern. Mikrowellenantennen vertragen zwar ein gewisses Maß an Verschmutzung, versagen aber, wenn die Schmutzschicht zu dick wird. In diesem Fall wird das Radarsignal im Bereich der Antenne völlig absorbiert, so daß kein Nutzecho mehr feststellbar ist. Mit herkömmlichen Verfahren kann dann nicht mehr unterschieden werden, ob kein Reflektor im Strahlengang vorhanden ist, ob eine starke Dämpfung im Strahlengang außerhalb der Antenne (etwa Schaum auf dem Füllgut) vorhanden ist, ob die Antenne durch Ansatzbildung zugesetzt ist oder ob sich Füllgut in unmittelbarer Nähe der Antenne befindet.

Aufgabe der Erfindung ist die Schaffung eines Verfahrens der eingangs angegebenen Art, das die Erkennung von Ansatzbildungen an der Antenne sowie weiterer Störungen, wie z. B. einer Beschädigung oder des Verlustes der Antenne, ermöglicht und mit dem zwischen einem Ansatz an der Antenne und Füllgut in unmittelbarer Nähe der Antenne unterschieden werden kann.

Diese Aufgabe wird nach der Erfindung dadurch gelöst, daß die aktuelle Echofunktion mit einer einer ungestörten Messung entsprechenden, gespeicherten ungestörten Echofunktion verglichen wird und festgestellte Abweichungen im Antennenbereich und dem sich an die Antenne anschließenden Nahbereich zur Erkennung einer Ansatzbildung und/oder sonstiger Störungen ausgewertet werden.

Die Erfindung beruht auf der Erkenntnis, daß sich der von Reflexionen des Antennen- und Nahbereichs stammende Abschnitt der Echofunktion in charakteristischer Weise verändert, wenn die Antenne mit einem Ansatz von Füllgut behaftet ist. Solche Reflexionen können insbesondere von der Antenne selbst stammen, wenn diese beispielsweise als Hornantenne ausgebildet ist. Zwar ist man bestrebt, durch eine möglichst gute Anpassung der Antenne Impedanzsprünge zu vermeiden, damit keine störenden Nahreflexionen auftreten, die das Nutzsignal überdecken würden, doch gibt es in der Praxis etwa bei einer Hornantenne im Bereich der Antenneneinkopplung und des Horns innere Reflexionen. Ferner entstehen Reflexionen in dem sich unmittelbar an die Antenne anschließenden Nahbereich durch mehrfache innere Reflexionen im Bereich von Verbindungsleitungen zum HF-Modul, Einkopplungen und Antenne. Bei dem erfindungsgemäßen Verfahren werden diese Reflexionen des Antennen- und Nahbereichs zur Erkennung von Störungen ausgenutzt. Zu diesem Zweck wird vor der ersten Inbetriebnahme der Meßanordnung eine ungestörte Echofunktion als Referenzfunktion aufgenommen und in einem nichtflüchtigen Speicher abgelegt. Die ungestörte Echofunktion umfaßt mindestens den Echoverlauf im Antennen- und Nahbereich, zur sicheren Bestimmung des Nutzechos vorteilhaft aber auch den Echoverlauf bis zum Ende des Meßbereichs. Die Aufnahme und Speicherung der ungestörten Echofunktion erfolgt auf die gleiche Weise und mit den gleichen Mitteln wie die Aufnahme und Speicherung der aktuellen Echofunktionen im Verlauf der Messung, jedoch unter der Bedingung, daß die Messung nicht gestört ist. Die Meßanordnung einschließlich der Antenne muß also unbeschädigt sein und einwandfrei arbeiten, an der Antenne darf kein Ansatz von Füllgut bestehen, und es darf sich kein Füllgut im Nahbereich der Antenne befinden. Vorzugsweise erfolgt die Aufnahme der ungestörten Echofunktion bei leerem Behälter. Die Aufnahme der ungestörten Echofunktion kann bei Bedarf wiederholt werden, beispielweise dann, wenn sich die Meßbedingungen geändert haben, wobei jedoch dann wieder die angegebenen Bedingungen einer ungestörten Messung erfüllt sein müssen.

Im Betrieb wird jede während der Füllstandsmessung aufgenommene aktuelle Echofunktion im Antennen- und Nahbereich mit der gespeicherten ungestörten Echofunktion verglichen, und vorhandene Unterschiede werden zur Erkennung einer Ansatzbildung oder sonstiger Störungen analysiert und bewertet. Hierzu wird vorteilhaft auch die Differenzfunktion zwischen den beiden Echofunktionen im Antennen- und Nahbereich gebildet und betrachtet.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels an Hand der Zeichnungen. In den Zeichnungen zeigen:
- Fig. 1: das Prinzip eines mit Mikrowellen arbeitenden Füllstandsmeßgeräts,
- Fig. 2: das Blockschaltbild eines Füllstandsmeßgeräts mit Einrichtungen zur Erkennung einer Ansatzbildung an der Antenne und weiterer Störungen,
- Fig. 3: die ungestörte Echofunktion einer Antenne mit dem zu erwartenden Empfangspegel und einem um 10 dB abgesenkten Pegel,
- Fig. 4: die ungestörte Echofunktion der gleichen Antenne und deren aktuelle Echofunktion im Fall einer geringen Ansatzbildung,
- Fig. 5: die entsprechenden Echofunktionen der gleichen Antenne wie in Fig. 4 im Fall einer starken Ansatzbildung,
- Fig. 6: die ungestörte Echofunktion der gleichen Antenne und deren aktuelle Echofunktion in dem Fall, daß sich der Füllstand in der Nähe der Antennenkante befindet, die Antenne jedoch ansatzfrei ist, und
- Fig. 7 bis 10: das Flußdiagramm eines Computerprogramms zur Auswertung der Echofunktionen.

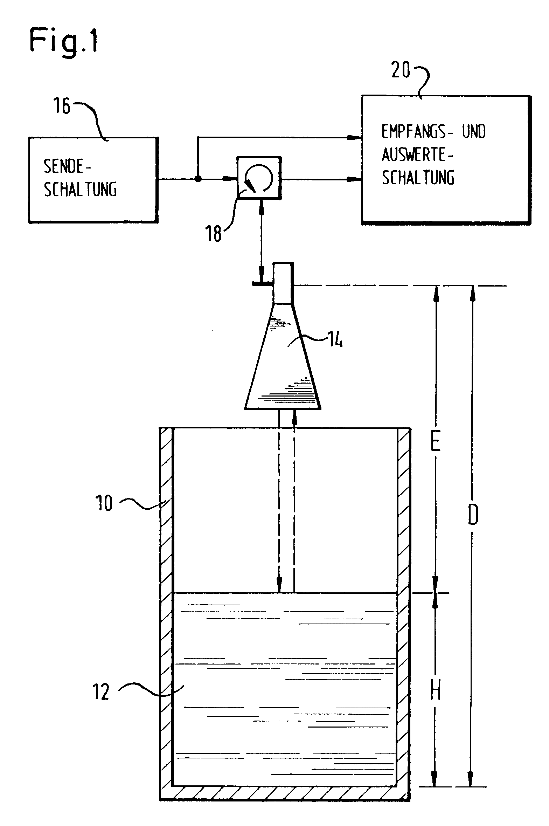

Fig. 1 der Zeichnung zeigt einen Behälter 10, der bis zu einer Höhe H mit einem Füllgut 12 gefüllt ist. Zur Messung des Füllstands H ist oberhalb des Behälters 10 eine Antenne 14 angebracht, mit der eine elektromagnetische Welle zur Oberfläche des Füllguts 12 gesendet und die an dieser Oberfläche reflektierte Echowelle empfangen werden kann. Die ausgesendete elektromagnetische Welle wird durch eine Sendeschaltung 16 erzeugt, die über eine Sende-Empfangsweiche 18 mit der Antenne 14 verbunden ist. Die von der Antenne 14 empfangene Echowelle wird über die Sende-Empfangs-Weiche 18 einer Empfangs- und Auswerteschaltung 20 zugeführt, die aus dem der Antenne 14 von der Sendeschaltung 16 zugeführten Sendesignal und dem von der Antenne 14 gelieferten Empfangssignal die Entfernung E zwischen der Antenne 14 und der Oberfläche des Füllguts 12 ermittelt. Da der Abstand D der Antenne 14 vom Boden des Behälters 10 bekannt ist, ergibt die Differenz zwischen diesem Abstand D und der gemessenen Entfernung E den gesuchten Füllstand H.

Da die zu messenden Entfernungen im Verhältnis zu der Ausbreitungsgeschwindigkeit der elektromagnetischen Wellen sehr klein sind und eine große Bandbreite zur Erzielung einer ausreichenden Radarauflösung notwendig ist, muß mit sehr kurzen Wellen gearbeitet werden, die im Mikrowellenbereich liegen. Die Antenne 14 ist natürlich für die Aussendung und den Empfang von so kurzen Wellen ausgebildet; sie ist beispielsweise mit einem Hornstrahler ausgestattet, wie in Fig. 1 angedeutet ist.

Für die Messung der Entfernung E kann jedes aus der Radartechnik bekannte Verfahren angewendet werden. Alle diese Verfahren beruhen darauf, die Laufzeit der elektromagnetischen Wellen von der Antenne zur reflektierenden Oberfläche und zurück zur Antenne zu messen. Da die Ausbreitungsgeschwindigkeit der elektromagnetischen Wellen bekannt ist, kann aus der gemessenen Laufzeit die zurückgelegte Strecke berechnet werden. Da außer dem Nutzecho, das an der zu erfassenden Oberfläche reflektiert wird, auch Störechos auftreten können, wird üblicherweise das gesamte Empfangssignal in eine Echofunktion umgesetzt, die die Intensitätsverteilung des Empfangssignals als Funktion der Entfernung darstellt. Aus dieser Echofunktion wird das Nutzecho ermittelt und dessen Laufzeit festgestellt.

Ein bekanntes Radarverfahren ist das Pulsradar, bei dem periodisch kurze Sendeimpulse ausgesendet werden und in einer sich an jede Aussendung eines Sendeimpulses anschließenden Empfangsphase die Echosignale mit der Frequenz des Sendeimpulses erfaßt werden. In diesem Fall stellt die im Verlauf jeder Empfangsphase empfangene Signalamplitude über der Zeit unmittelbar die Echofunktion dar. Jeder Wert dieser Echofunktion entspricht der Amplitude eines in einem bestimmten Abstand von der Antenne reflektierten Echos. Die Lage des Nutzechos in der Echofunktion zeigt daher unmittelbar die zu messende Entfernung an.

Die direkte Messung der Laufzeit wird bei dem Frequenzmodulations-Dauerstrichverfahren (FMCW-Verfahren) vermieden. Bei diesem Verfahren wird eine kontinuierliche Mikrowelle ausgesendet, die periodisch linear frequenzmoduliert ist, beispielsweise nach einer Sägezahnfunktion. Die Frequenz jedes empfangenen Echosignals weist daher gegenüber der Augenblicksfrequenz, die das Sendesignal im Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne, und die Höhe der Frequenzkennlinie entspricht der Größe der Echoamplitude. Dieses Fourierspektrum stellt daher in diesem Fall die Echofunktion dar.

Die Antenne dient zur Einkopplung in den Prozeß, wobei durch eine möglichst gute Anpassung Impedanzsprünge vermieden werden sollen, damit keine störenden Nahreflexionen auftreten, die das Nutzsignal überdecken würden. Trotzdem gibt es in der Praxis etwa bei einem Hornstrahler im Bereich der Antenneneinkopplung und des Horns innere Reflexionen.

Ein besonderes Problem bei der Füllstandsmessung mit Mikrowellen besteht darin, daß sich an der Antenne ein Ansatz von Füllgut bilden kann. Diese Gefahr besteht besonders bei staub- oder pulverförmigen Füllgütern, insbesondere wenn die Antenne feucht wird, sowie bei klebrigen und zähflüssigen Füllgütern. Mikrowellenantennen vertragen zwar ein gewisses Maß an Verschmutzung, versagen aber, wenn die Schmutzschicht zu dick wird. In diesem Fall wird das Radarsignal im Bereich der Antenne völlig absorbiert, so daß kein Nutzecho mehr feststellbar ist. Mit herkömmlichen Verfahren kann dann nicht mehr unterschieden werden, ob kein Reflektor im Strahlengang vorhanden ist, ob eine starke Dämpfung im Strahlengang außerhalb der Antenne (etwa Schaum auf dem Füllgut) vorhanden ist, oder ob die Antenne durch Ansatzbildung zugesetzt ist.

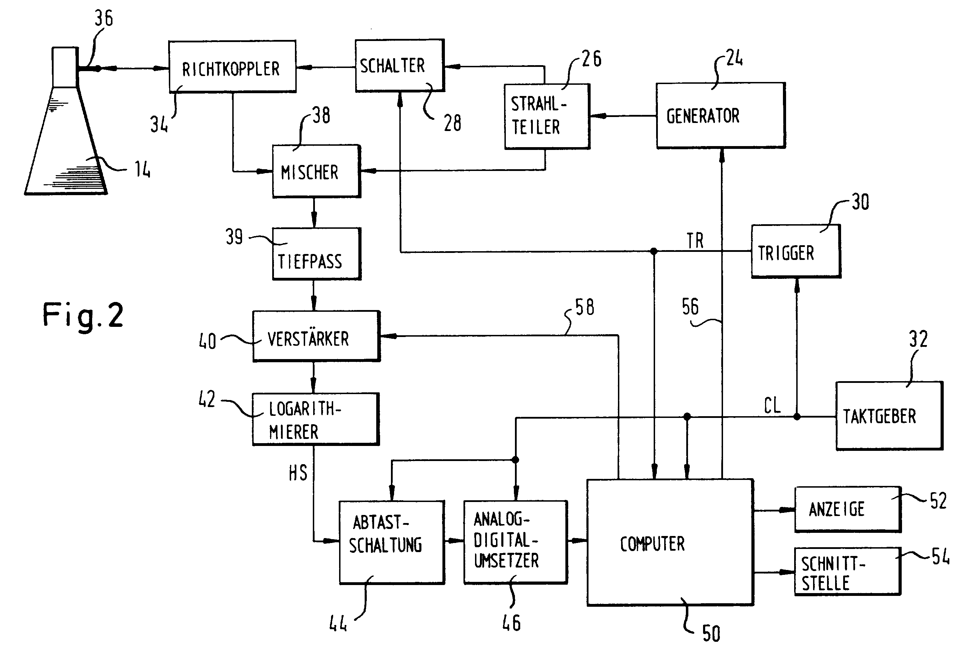

Fig. 2 zeigt das Blockschaltbild der Sendeschaltung und der Empfangs- und Auswerteschaltung eines nach dem Pulsradarverfahren arbeitenden Füllstandsmeßgeräts, bei dem zusätzlich Maßnahmen getroffen sind, um Ansatzbildungen an der Antenne sowie gegebenenfalls weitere Störungen zu erkennen.

In Fig. 2 ist wieder schematisch die als Hornstrahler ausgebildetet Antenne 14 dargestellt. Ein Generator 24 erzeugt eine kontinuierliche Höchstfrequenzschwingung mit der Frequenz der auzusendenen Mikrowelle, die über einen Strahlteiler 26 einem Schalter 28 zugeführt wird. Der Schalter 28 wird durch ein Triggersignal TR, das von einem Trigger 30 auf Grund eines von einem Taktgeber 32 gelieferten Taktsignals CL erzeugt wird, periodisch betätigt. Der Ausgang des Schalters 28 ist über einen Richtkoppler 34, der die Rolle der Sende-Empfangs-Weiche von Fig. 1 spielt, mit dem Einkoppelstift 36 der Antenne 14 verbunden. Bei jedem kurzzeitigen Schließen des Schalters 28 wird ein kurzer Sendeimpuls von der Antenne 14 ausgesendet. Die auf Grund des Sendeimpulses von der Antenne 14 empfangenen Echosignale werden über den Richtkoppler 34 dem einen Eingang eines Mischers 38 zugeführt, der an seinem zweiten Eingang ein durch den Strahlteiler 26 vom Ausgangsignal des Generators 24 abgezweigtes Signal empfängt. Das durch die Mischung der beiden Signale im Mischer 38 erhaltene Hüllkurvensignal wird nach Filterung in einem Tiefpaß 39 in einem Verstärker 40 verstärkt, dem ein Logarithmierer 42 nachgeschaltet ist, der die laufzeitabhängige Dämpfung der Echosignale kompensiert. Das am Ausgang des Logarithmierers 42 abgegebene verstärkte und logarithmierte Hüllkurvensignal HS, das die Echofunktion in analoger Form darstellt, wird einer Abtastschaltung 44 zugeführt, die daraus im Verlauf der sich an den Sendeimpuls anschließenden Empfangsphase unter Steuerung durch das Taktsignal CL eine Reihe von Abtastwerten entnimmt, die vorzugsweise in gleichen Zeitabständen liegen. Jeder Abtastwert hat die Amplitude des Hüllkurvensignals HS im Abtastzeitpunkt. Ein der Abtastschaltung 44 nachgeschalteter Analog-Digital-Umsetzer 46 setzt jeden Abtastwert in eine digitale Codegruppe um, die eine Zahl darstellt, deren Zahlenwert der Amplitude des Abtastwerts entspricht. Die Folge der digitalen Codegruppen stellt die digitalisierte Echofunktion dar, deren Amplitudenauflösung durch die Stellenzahl der digitalen Codegruppen und deren Zeitauflösung durch den Zeitabstand der durch die Abtastschaltung 44 entnommenen Abtastwerte bestimmt ist.

Bei der Durchführung einer Füllstandsmessung werden die vom Analog-Digital-Umsetzer 46 im Verlauf einer Empfangsphase nacheinander gelieferten digitalen Codegruppen in einen Computer 50 eingegeben und in einem Arbeitsspeicher (Schreib-Lese-Speicher, RAM) des Computers gespeichert. Diese gespeicherten Codegruppen stellen die aktuelle Echofunktion des Behälters 10 im Verlauf eines Meßzyklus dar. Der Computer 50 ermittelt aus der gespeicherten aktuellen Echofunktion das an der Füllgutoberfläche reflektierte Nutzecho, bestimmt die Laufzeit des Nutzechos und berechnet aus dieser Laufzeit den Füllstand im Behälter. Das Meßergebnis kann mittels einer Anzeige 52 angezeigt oder über eine Schnittstelle 54 zu einem Prozeßleitsystem oder dgl. ausgegeben werde. Falls erwünscht, können im Arbeitsspeicher des Computers 50 auch mehrere aufeinanderfolgende Echofunktionen gespeichert werden, so daß außer der aktuellen Echofunktion auch eine oder mehrere vorhergehende Echofunktionen für eine gemeinsame Auswertung zur Verfügung stehen. Dadurch ist es insbesondere möglich, die zeitliche Änderung der Echofunktion zu berücksichtigen, wie sie beispielsweise durch eine Änderung des Füllstands verursacht wird.

Die bisher beschriebene Funktion der Anordnung von Fig. 2 entspricht einem üblichen Stand der Technik. Die Besonderheit des hier beschriebenen Verfahrens besteht darin, daß außer den aktuellen Echofunktionen, die zur Füllstandsmessung aufgenommen und im Computer 50 ausgewertet werden, noch eine "ungestörte" Echofunktion aufgenommen wird, die einer ungestörten Messung entspricht und ebenfalls im Computer 50 gespeichert wird, jedoch als Referenzfunktion in einem nichtflüchtigen Speicher. In dieser ungestörten Echofunktion ist mindestens der Echoverlauf im Bereich der Antenne und in dem sich an die Antenne anschließenden Nahbereich festgehalten; zur sicheren Bestimmung des Nutzechos enthält jedoch die ungestörte Echofunktion vorteilhaft den gesamten Echoverlauf bis zum Meßbereichsende. Damit die ungestörte Echofunktion einer ungestörten Messung entspricht, wird sie unter den folgenden Bedingungen aufgenommen:
- die Antenne und die Einkopplung sind vorhanden und nicht beschädigt (weder durch Korrosion noch mechanisch noch durch sonstige Effekte);
- die Antenne ist nicht verschmutzt;
- der Füllstand ist nicht in unmittelbarer Nähe der Antenne oder gar in der Antenne; im Idealfall ist der Behälter leer.

Vorzugsweise wird die ungestörte Echofunktion vor der ersten Inbetriebnahme der Meßanordnung aufgenommen. Die Aufnahme kann bei Bedarf wiederholt werden, beispielsweise immer dann, wenn sich die Meßbedingungen geändert haben.

Die Aufnahme der ungestörten Echofunktion erfolgt mit der Anordnung von Fig. 2 in der gleichen Weise wie die zuvor geschilderte Aufnahme der aktuellen Echofunktionen bei der Füllstandsmessung; der einzige Unterschied besteht darin, daß die vom Analog-Digital-Umsetzer 44 abgegebene digitalisierte Echofunktion bei der Eingabe in den Computer 50 in einen nichtflüchtigen Speicher eingeschrieben wird, beispielsweise einen elektrisch löschbaren programmierbaren Festwertspeicher (EEPROM).

Bei der Durchführung von Füllstandsmessungen wird dann jede aufgenommene aktuelle Echofunktion im Antennen- und Nahbereich mit der gespeicherten ungestörten Echofunktion verglichen, und vorhandene Unterschiede werden zur Erkennung einer Ansatzbildung oder sonstiger Störungen analysiert und bewertet. Hierzu wird vorteilhaft auch die Differenzfunktion zwischen den beiden Echofunktionen im Antennen- und Nahbereich gebildet und betrachtet.

Zur Kurvenanalyse werden insbesondere die folgenden Kriterien betrachtet:
- Die Differenzfunktion über- oder unterschreitet im Antennen- und Nahbereich bestimmte Schwellen;
- die Differenzfunktion weist innerhalb des Antennen- und Nahbereichs Extrema auf, deren Reihenfolge, Lage und Höhe analysiert wird;
- das Flächenintegral über die Differenzfunktion oder über den Betrag der Differenzfunktion im Antennen- und Nahbereich;
- der Verlauf der (z.B. linear) gewichteten Differenzfunktion im Antennen- und Nahbereich;
- die Lage und Höhe von Maxima der aktuellen Echofunktion im Antennen- und Nahbereich;
- die Höhe des Nutzechos in Bezug zur gemessenen Entfernung.

Falls außer der aktuellen Echofunktion auch noch vorhergehende Echofunktionen im Computer gespeichert sind, können noch die folgenden Kriterien herangezogen werden:
- die Lage und Höhe von Maxima der zeitlich vorhergehenden Echofunktion im Antennen- und Nahbereich;
- ein Vergleich der Höhe und Lage des Nutzechos in der aktuellen Echofunktion und in vorhergehenden Echofunktionen.

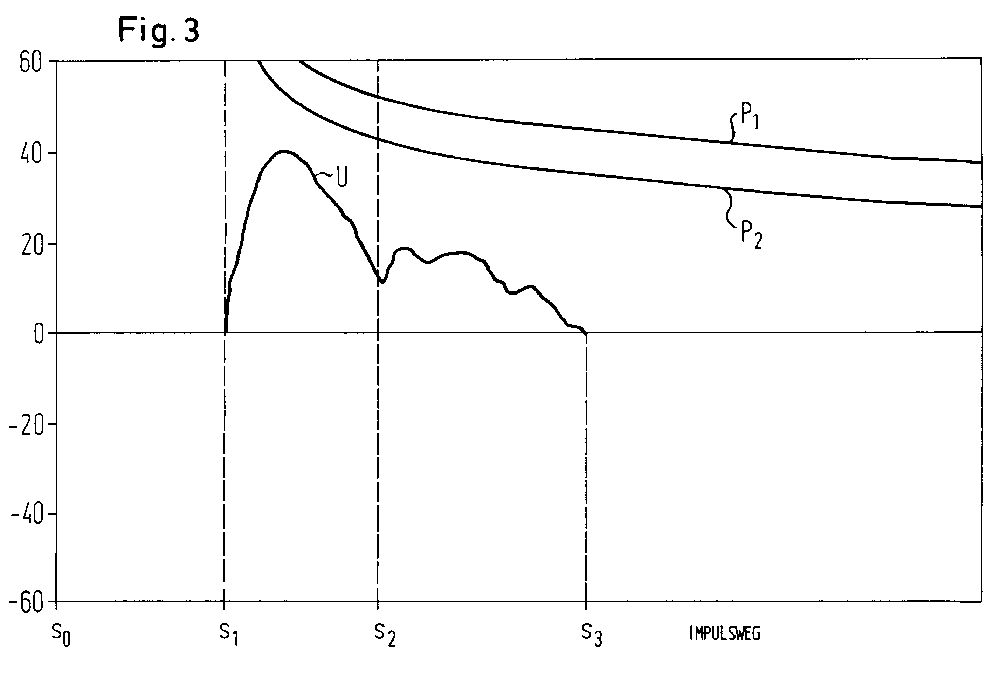

Diese und weitere aus den Funktionen gewonnenen Kennwerte können dann logisch miteinander verknüpft werden, damit differenzierte Aussagen über den Zustand des Meßsystems erhalten werden.
Zum besseren Verständnis soll die Kurvenanalyse an Hand von einigen Beispielen erläutert werden, deren Echofunktionen in den Diagrammen von Fig. 3 bis 6 dargestellt sind.

Das Diagramm von Fig. 3 zeigt die ungestörte Echofunktion U einer Antenne im Antennen- und Nahbereich. Die ungestörte Echofunktion U ist unter den zuvor angegebenen Bedingungen aufgenommen worden, also bei leerem Behälter, unbeschädigter Antenne und Fehlen jeglicher Ansatzbildung an der Antenne.

Auf der Ordinate ist die relative Signalleistung in dB aufgetragen. Die Abszisse stellt den von der Mikrowelle zurückgelegten Weg dar: Der Punkt s₀ ist der Ort des Schalters 28, an em der Sendeimpuls erzeugt wird, der Punkt s₁ ist der Ort des Einkoppelstifts 36 des Hornstrahlers 14 und der Punkt s₂ entspricht der Kante des Hornstrahlers. Somit entspricht die Strecke s₁-s₂ dem Antennenbereich. Im Punkt s₃ ist das von inneren Reflexionen stammende Auslaufen des Sendesignals abgeklungen; die Strecke s₂-s₃ entspricht dem Nahbereich der Antenne. Anstelle der von den Mikrowellen zurückgelegten Strecken könnten natürlich ebensogut die Laufzeiten der Mikrowellen angegeben werden, die den Strecken proportional sind. Ferner ist in Fig. 3 der nach der Radargleichung bei idealen Meßbedingungen zu erwartende Empfangspegel P₁ und ein im Vergleich dazu um 10 dB abgesenkter Pegel P₂ eingezeichnet. Der Pegel P₂ gibt die Grenze der bei realen Meßsignalen noch tolerierbaren Zusatzdämpfung an. Zwischen den beiden Pegeln P₁ und P₂ liegt das erlaubte Band: alle Echosignale, deren Amplitude im erlaubten Band liegt, werden zur Auswertung zugelassen, während kleinere Echosignale, die das erlaubte Band nicht erreichen, verworfen werden. Das erlaubte Band des Empfangspegels kann je nach Meßmedium, der maximal zu messenden Entfernung, auftretenden Wellen auf der Meßoberfläche und anderen Einsatzbedingungen auch anders gewählt werden.

Die in Fig. 3 dargestellten Funktionen U, P₁ und P₂ sind im Computer 50 abgespeichert und werden im Verlauf jeder Messung zur Auswertung der erhaltenen aktuellen Echofunktion verwendet.

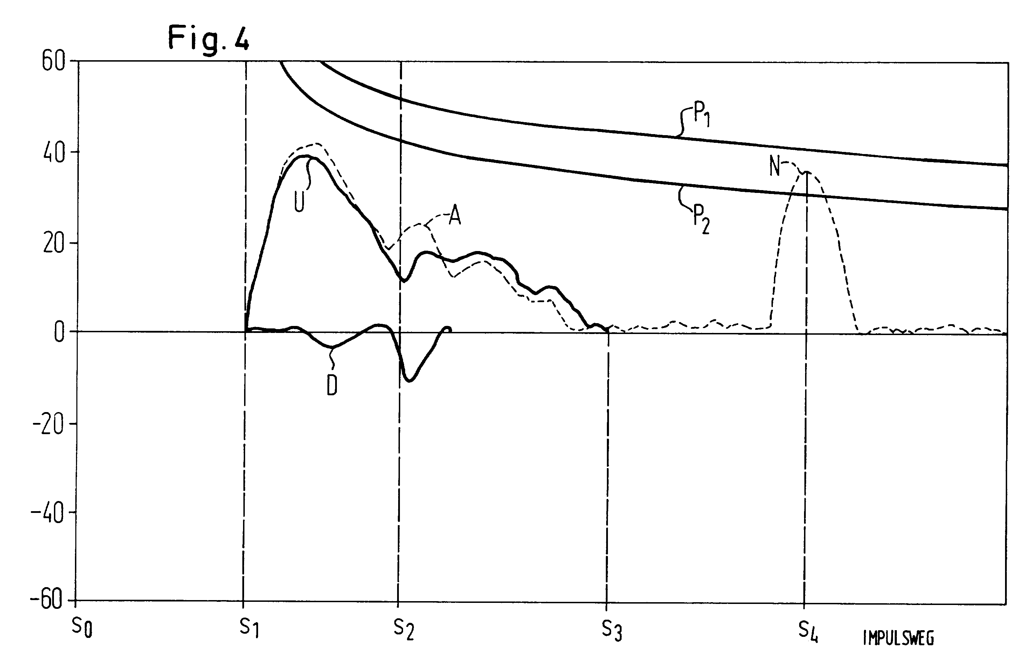

Das Diagramm von Fig. 4 zeigt zusätzlich zu den bereits in Fig. 3 dargestellten Funktionen die aktuelle Echofunktion A, die bei einer mit der gleichen Antenne durchgeführten Messung erhalten wird, wenn an der Antenne eine geringe Ansatzbildung besteht. Der Deutlichkeit wegen ist angenommen, daß der Behälter fast voll ist, so daß sich die zu messende Füllgutoberfläche nahe bei der Antenne befindet, und es ist nur der dieser kurzen Meßentfernung entsprechende Abschnitt der aktuellen Echofunktion dargestellt. Ferner ist im Antennen- und Nahbereich die Differenzfunktion D = U - A aufgetragen. Die Differenzfunktion D ermöglicht eine besonders einfache Kurvenanalyse. Die aktuelle Echofunktion A weicht im Antennen- und Nahbereich nur geringfügig von der ungestörten Echofunktion U ab; dementsprechend sind die Abweichungen der Differenzfunktion D von der Nullinie verhältnismäßig klein. Die aktuelle Echofunktion A enthält das Nutzecho N, dessen Maximum im Punkt s₄ liegt; dieser Punkt entspricht dem Ort des Nutzreflektors, also der zu messenden Füllgutoberfläche. Die Strecke s₁-s₄ ist somit die Meßentfernung, die bei dem dargestellten Beispiel etwa 2 m beträgt. Die Amplitude des Nutzechos N ist infolge der Ansatzbildung an der Antenne im Vergleich zu dem nach der Radargleichung (Funktion P₁) zu erwartenden idealen Nutzecho um etwa 5 dB geschwächt, sie liegt jedoch noch in dem erlaubten Band. Diese Schwächung des aktuellen Nutzechos ist noch akzeptabel; sie könnte allenfalls bei sehr großen Meßentfernungen wegen des endliche Dynamikumfangs des Meßgeräts und der entfernungsbedingten Schwächung des Echos die Entfernungsmessung stören.

Deshalb wird im Fall von Fig. 4 keine Störungsmeldung ausgelöst und die auf Grund des Nutzechos N ermittelte Entfernung als richtig akzeptiert. Allenfalls kann ein Warnung vor beginnender Ansatzbildung ausgegeben werden, wenn die Differenzfunktion D um mehr als einen vorgegebenen Schwellenwert vom Wert 0 abweicht; dieser Schwellenwert kann beispielsweise 10 dB betragen. Der Betrag der maximalen Abweichung oder auch das Flächenintegral über den Betrag der Differenzfunktion D kann als Maß für die Größe der Ansatzbildung ermittelt und angezeigt werden. Hierzu kann der Betrag der Differenzfunktion D linear oder nichtlinear gewichtet werden.

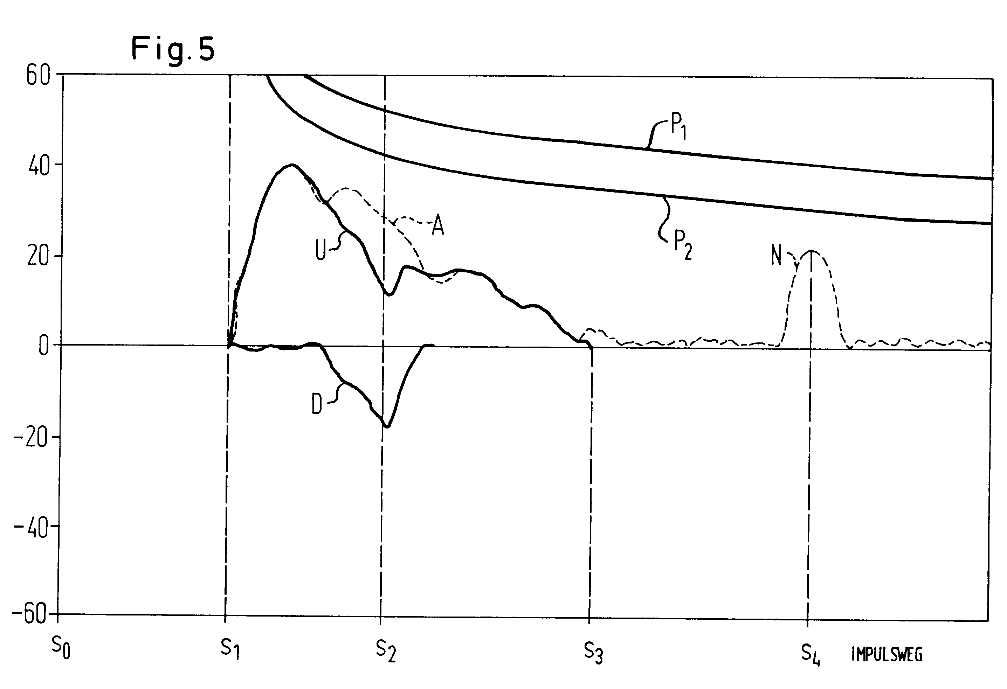

Fig. 5 zeigt wieder die Kurven von Fig. 4, jedoch für den Fall, daß die Ansatzbildung an der Antenne so stark ausgeprägt ist, daß die Amplitude des Echos eines Reflektors in 2 m Entfernung um ca. 20 dB unterhalb der Kurve P₁ liegt. Diese Echoamplitude liegt somit nicht mehr in dem erlaubten Band. Im Antennen- und Nahbereich gibt es sowohl Bereiche, in denen die aktuelle Echofunktion A und die ungestörte Echofunktion U annähernd gleich sind, wie auch Bereiche, in denen große Abweichungen zwischen diesen beiden Echofunktionen vorhanden sind. Ein Vergleich der aktuellen Echofunktion A mit einem Schwellenwert an einer bestimmten Stelle des Antennenbereichs würde hier wie auch im Beispiel von Fig. 4 nicht mit Sicherheit die Ansatzbildung erkennen lassen; selbst bei katastrophalem Ansatz könnte die Ansatzwarnung ausbleiben. Der Vergleich der Differenzfunktion D mit einem vorgegebenen Schwellenwert von z. B. 10 dB im gesamten Antennen- und Nahbereich führt dagegen mit Sicherheit zur Ansatzdetektion. Der Computer 50 ermittelt den Betrag der maximalen Abweichung der Differenzfunktion D vom Wert 0 und gibt eine Ansatzwarnung an die Anzeige 52 und/oder die Schnittstelle 54 aus, wenn die Abweichung den vorgegebenen Schwellenwert übersteigt. Der Betrag der maximalen Abweichung oder auch das Flächenintegral über den Betrag der Differenzfunktion D kann als Maß für die Größe der Ansatzbildung ausgegeben werden.

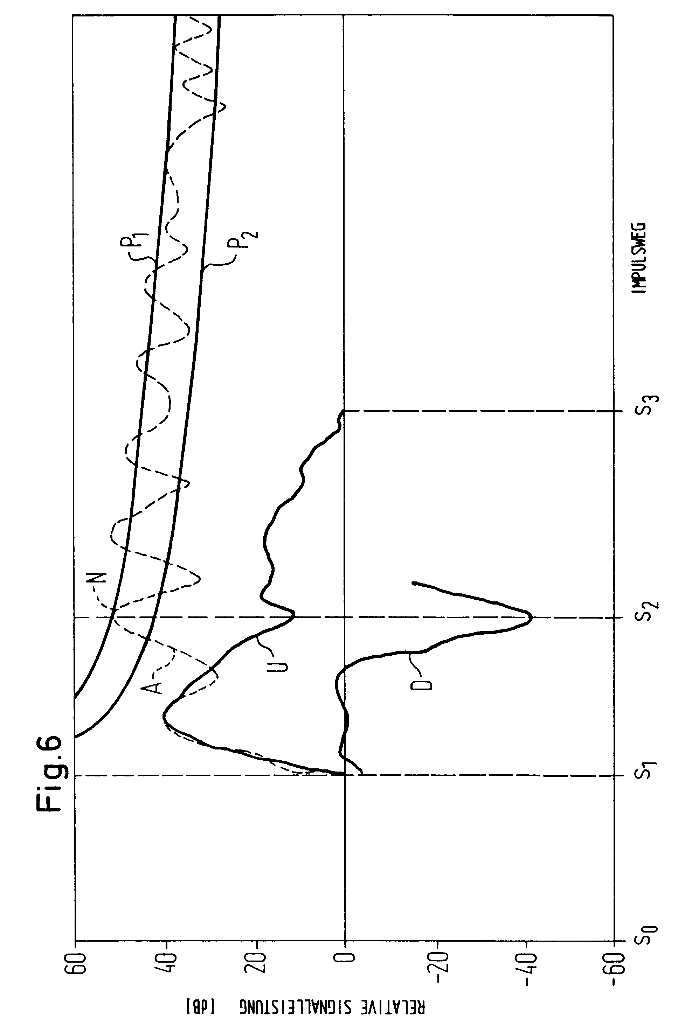

In Fig. 6 wird der Fall betrachtet, daß sich der Füllstand in der Nähe der Antennenkante befindet, wobei die Antenne ansatzfrei ist. Die erste Echospitze in der aktuellen Echofunktion A stellt das an der Füllgutoberfläche reflektierte Nutzecho N dar; daran schließen sich weitere Echospitzen an, die von Mehrfachreflexionen stammen. Das Verfahren der bloßen Detektion der Größe der aktuellen Echofunktion an einer Stelle nahe der Antennenkante würde in diesem Fall eine Warnung auslösen, weil nicht zwischen Füllstand nahe der Antennenkante und Ansatzbildung unterschieden werden könnte. Die Tatsache, daß die Differenzfunktion D ein Minimum etwas außerhalb des Antennenbereichs und die aktuelle Echofunktion A ein Maximum etwas außerhalb des Antennenbereichs hat, weist aber eindeutig darauf hin, daß es sich hier nicht um Ansatz, sondern um Füllstand in Antennennähe handelt. Ein weiteres eindeutiges Indiz ist die Größe des Minimums der Differenzfunktion D, die auf eine geschlossene reflektierende Fläche hinweist. Wäre dies Ansatz, so müßte auch der innere Bereich der Hornantenne zugesetzt sein, wodurch der vordere Teil der Differenzfunktion beeinflußt würde. Auf Grund dieser Kriterien unterläßt der Computer 50 im Fall von Fig. 6 eine Ansatzwarnung, und er ermittelt den Füllstand aus der Laufzeit der ersten Echospitze in der aktuellen Echofunktion.

Durch die Kurven P₁ und P₂ wird als wichtiges Kriterium auch die Amplitude des empfangenen Nutzechos in Betracht gezogen. Diese Amplitude hängt ab von der Sendeleistung, Entfernung und Größe des Nutzreflektors, Reflexionseigenschaften des Mediums, Rauhigkeit der reflektierenden Oberfläche und Geometrie des Behälters. Aufgrund der Radargleichung existiert bei der Füllstandsmessung ein näherungsweise quadratischer Zusammenhang zwischen der von der Füllgutoberfläche in die Antenne zurückreflektierten Leistung und der Entfernung, solange die Behälterwände oder Einbauten den Strahlengang nicht zu sehr stören. Aufgrund der endlichen Behälterdurchmesser wird aus großen Entfernungen aber mehr Signal empfangen als von der Radargleichung unter Freiraumbedingungen vorhergesagt. Den genauen Zusammenhang kann man individuell bei der Inbetriebnahme der Meßanordnung in einem bestimmten Behälter bestimmen. Anhand der Reflexionseigenschaften des Füllguts wird so ein entfernungsabhängiges Band definiert, in dem unter Berücksichtigung etwaiger Leistungsschwankungen aufgrund von turbulenten Flüssigkeits- oder zerklüfteten Feststoffoberflächen die auf die Sendeleistung normierte Leistung des Nutzechos liegen muß. Bei dauerndem Über- oder Unterschreiten der Grenzen dieses entfernungsabhängigen Bandes muß eine Störung vorliegen.

Wenn im Computer außer der aktuellen Echofunktion auch eine oder mehrere vorhergehende Echofunktionen gespeichert sind, ist es zur sicheren Unterscheidung zwischen Ansatz und Füllgut im Nahbereich der Antenne (oder sogar in der Antenne) weiterhin vorteilhaft, zusätzlich zu den zuvor erwähnten Kriterien auch die Höhe und die Entfernung des Nutzechos aus den vorhergehenden Messungen zu berücksichtigen. Dabei wird die Tatsache ausgenutzt, daß sich bei einer kontinuierlichen Füllstandsmessung der Füllstand und demzufolge auch die Lage des Nutzechos nicht sprunghaft ändern kann. So könnte beispielsweise in Fig. 5 die im Antennenbereich liegende Spitze der aktuellen Echofunktion A - obwohl stark verformt und daher eher nicht von einer reflektierenden Fläche stammend - prinzipiell auch durch Reflexion an der Oberfläche eines in der Antenne stehenden Mediums mit kleiner Dielektrizitätszahl entstanden sein. Dies kann aber ausgeschlossen werden, wenn das Nutzecho bisher immer an einer anderen Stelle war und nicht kontinuierlich in diese Spitze hineingewandert ist.

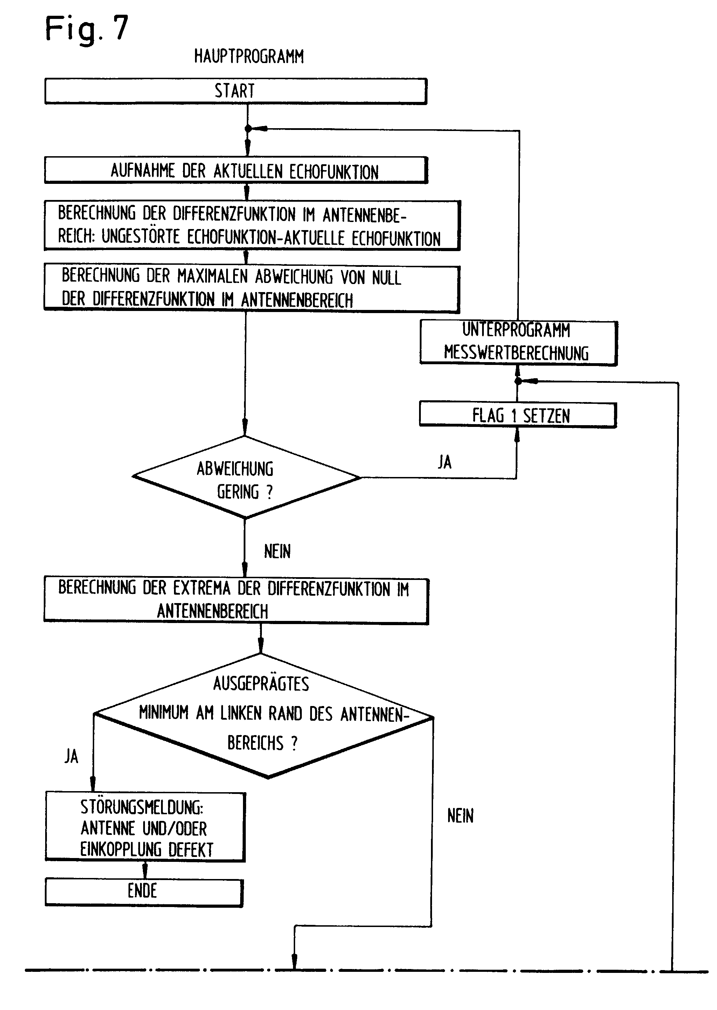

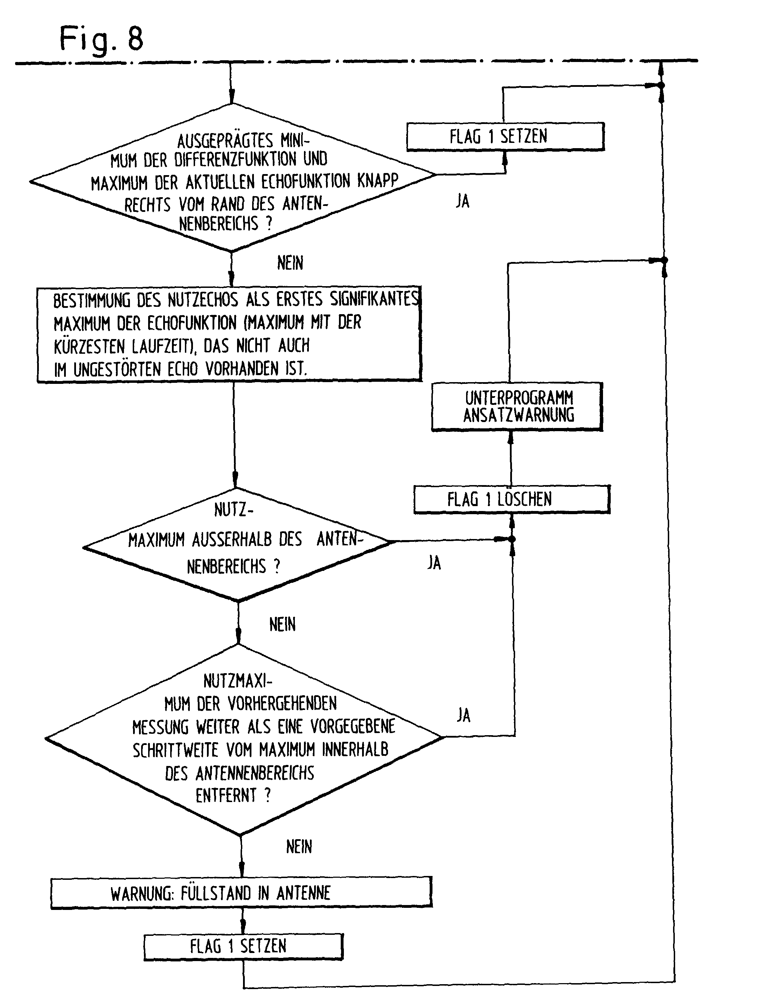

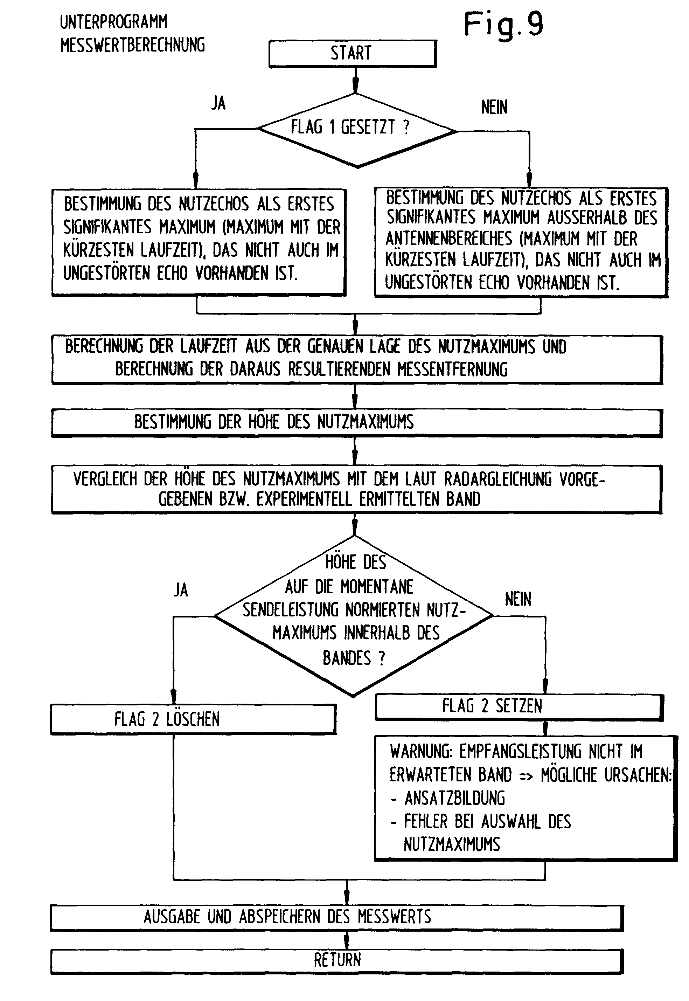

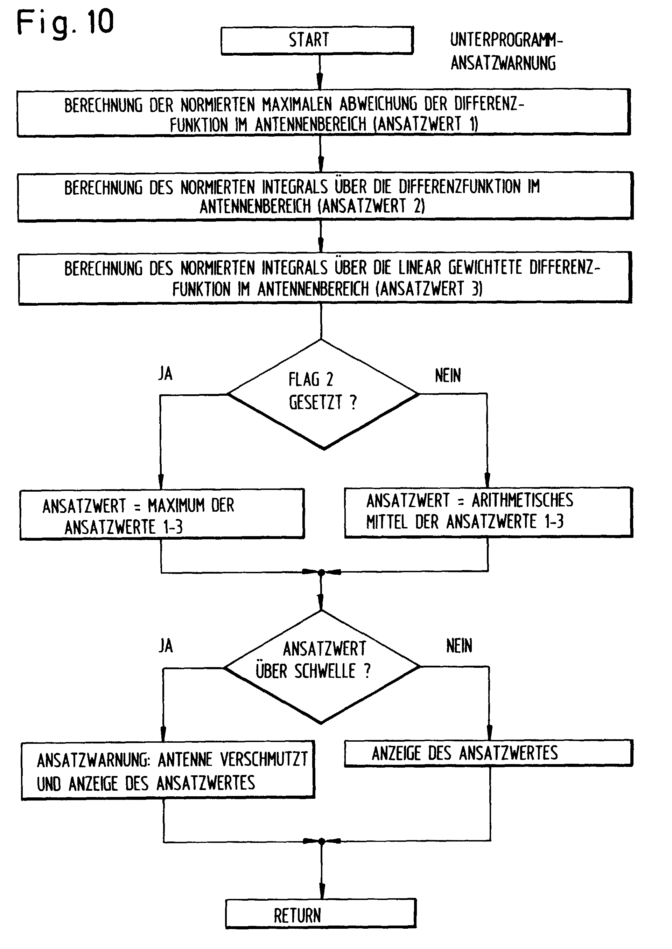

Die Figuren 7 bis 10 zeigen als Beispiel das Flußdiagramm eines Computerprogramms, mit dem der Computer 50 durch Auswertung der oben erläuterten Kriterien den Meßwert berechnen und, falls erforderlich, eine Ansatzwarnung ausgeben kann. Die Figuren 7 und 8, die entlang den strichpunktierten Linien zusammenzufügen sind, stellen zusammen das Hauptprogramm dar. Fig. 9 ist das Flußdiagramm eines Unterprogramms für die Meßwertberechnung, und Fig. 10 das Flußdiagramm eines Unterprogramms für die Ansatzwarnung; diese Unterprogramme werden vom Hauptprogramm an den angegeben Stellen aufgerufen.Es wird davon ausgegangen, daß vor dem ersten Start des Hauptprogramms die in Fig. 3 dargestellten Funktionen, also die ungestörte Echofunktion U und die beiden Pegelfunktionen P₁ und P₂, ermittelt und im Computer 50 abgespeichert worden sind. Nach dem Start des Hauptprogramms wiederholt sich dieses zyklisch, wobei in jedem Zyklus ein Meßwert berechnet und/ oder eine Ansatzwarnung ausgegeben wird. Wenn eine der Variablen "Flag 1" und "Flag 2" in einem Zyklus gesetzt oder gelöscht wird, behält sie diesen Zustand in den folgenden Zyklen bei, bis sie wieder in den entgegengesetzten Zustand gebracht wird. Im übrigen sind die Flußdiagramme auf Grund der eingetragenen Texte ohne weiteres verständlich.

## Patentansprüche

1. Verfahren zur Füllstandsmessung nach dem Radarprinzip, bei welchem mittels einer Antenne Mikrowellen zur Oberfläche eines Füllguts ausgesendet und die an der Oberfläche reflektierten Echowellen empfangen werden, für jede Messung aus den von der Antenne empfangenen Echowellen eine die Echoamplituden als Funktion der Entfernung darstellende aktuelle Echofunktion gebildet wird, aus der aktuellen Echofunktion das wahrscheinliche Nutzecho und dessen Laufzeit ermittelt wird und daraus der Abstand der Füllgut-Oberfläche von der Antenne bestimmt wird, dadurch gekennzeichnet, daß die aktuelle Echofunktion mit einer einer ungestörten Messung entsprechenden, gespeicherten ungestörten Echofunktion verglichen wird und festgestellte Abweichungen im Antennenbereich und dem sich an die Antenne anschließenden Nahbereich zur Erkennung einer Ansatzbildung und/oder sonstiger Störungen ausgewertet werden.

2. Verfahren nach Anspruch 1, dadurch gekennzeichnet, daß eine die Differenz zwischen der ungestörten Echofunktion und der aktuellen Echofunktion darstellende Differenzfunktion gebildet und zur Erkennung einer Ansatzbildung und/oder sonstiger Störungen ausgewertet wird.

3. Verfahren nach Anspruch 2, dadurch gekennzeichnet, daß zur Auswertung der Differenzfunktion festgestellt wird, ob die Differenzfunktion an vorbestimmten Stellen des Antennenbereichs und/oder des Nahbereichs vorbestimmte Pegelwerte überschreitet.

4. Verfahren nach Anspruch 2 oder 3, dadurch gekennzeichnet, daß zur Auswertung der Differenzfunktion die Extremwerte der Differenzfunktion und deren Lagen im Antennenbereich und/oder im Nahbereich ermittelt werden.

5. Verfahren nach einem der Ansprüche 2 bis 4, dadurch gekennzeichnet, daß zur Auswertung der Differenzfunktion das Integral der Differenzfunktion im Antennenbereich gebildet wird.

6. Verfahren nach einem der Ansprüche 2 bis 5, dadurch gekennzeichnet, daß zur Auswertung der Differenzfunktion das Integral der linear oder nichtlinear gewichteten Differenzfunktion im Antennenbereich gebildet wird.

7. Verfahren nach einem der vorhergehenden Ansprüche, dadurch gekennzeichnet, daß die Höhe des Nutzechos in der aktuellen Echofunktion ermittelt und festgestellt wird, ob diese Höhe, abhängig von der Meßentfernung, in einem vorgegebenen Band liegt.

8. Verfahren nach Anspruch 7, dadurch gekennzeichnet, daß das vorgegebene Band nach der Radargleichung bestimmt wird.

9. Verfahren nach Anspruch 7, dadurch gekennzeichnet, daß das vorgegebene Band bei ungestörter Messung experimentell bestimmt wird.

10. Verfahren nach einem der vorhergehenden Ansprüche, dadurch gekennzeichnet, daß die ungestörte Echofunktion bei leerem Behälter aufgenommen wird.

11. Verfahren nach einem der vorhergehenden Ansprüche, dadurch gekennzeichnet, daß die ungestörte Echofunktion in einem nichtflüchtigen Speicher abgespeichert wird.

## Claims

1. A method of level measurement on a radar basis in which by means of an antenna microwaves are emitted to the surface of a material in a container and the echo waves reflected from the surface thereof are received, an actual echo function representing the echo amplitudes as a function of the distance is formed from the echo waves received by the antenna for each measurement, the probable useful echo and the transit time thereof is established from the actual echo function, and the distance of the material surface from the antenna is determined therefrom, characterized in that the actual echo function is compared to a stored undisturbed echo function corresponding to an undisturbed measurement and deviations detected in the antenna region and in the adjacent proximity zone are evaluated to recognize the formation of a deposit and/or other trouble.

2. The method as set forth in claim 1, characterized in that a difference function representing the difference between said undisturbed echo function and said actual echo function is formed and evaluated to recognize said deposit formation and/or other trouble.

3. The method as set forth in claim 2, characterized in that for evaluating said difference function it is established whether said difference function exceeds predetermined level values at predetermined locations in the antenna region and/or the proximity zone.

4. The method as set forth in claim 2 or 3, characterized in that for evaluating said difference function the extreme values thereof and their locations in the antenna region and/or the proximity zone are established.

5. The method as set forth in any of the claims 2 to 4, characterized in that for evaluating said difference function the integral of the difference function in the antenna region is formed.

6. The method as set forth in any of the claims 2 to 5, characterized in that for evaluating said difference function the integral of the linearly or non-linearly weighted difference function in the antenna region is formed.

7. The method as set forth in any of the preceding claims, characterized in that the height of the useful echo in the actual echo function is established and it is determined whether this height, dependent on the measuring distance, lies in a given band.

8. The method as set forth in claim 7, characterized in that said given band is determined according to the radar equation.

9. The method as set forth in claim 7, characterized in that said given band is determined experimentally for an undisturbed measurement.

10. The method as set forth in any of the preceding claims, characterized in that said undisturbed echo function is obtained with said container empty.

11. The method as set forth in any of the preceding claims, characterized in that said undisturbed echo function is stored in a non-volatile memory.

## Revendications

1. Procédé pour mesurer des niveaux de remplissage selon le principe du radar, dans lequel des micro-ondes sont émises sur la surface d'un produit de remplissage, et dans lequel les ondes réfléchies par la surface sont reçues, où pour chaque mesure est constituée une fonction d'écho actuelle à partir des ondes réfléchies reçues par l'antenne représentant l'amplitude d'écho comme fonction de la distance, dans lequel, à partir de la fonction d'écho actuelle on détermine l'écho effectif probable et sa durée, puis la distance de la surface du produit de remplissage par rapport à l'antenne, caractérisé en ce que la fonction d'écho actuelle est comparée à une fonction d'écho non perturbée mémorisée correspondant à une mesure non perturbée, et en ce que des écarts constatés dans la zone d'antenne et dans la zone proche de l'antenne sont analysés pour détecter une formation de dépôt et/ou d'autres perturbations.

2. Procédé selon la revendication 1, caractérisé en ce qu'une fonction différentielle représentant la différence entre la fonction d'écho non perturbée et la fonction d'écho actuelle est formée et analysée pour détecter une formation de dépôt et/ou d'autres perturbations.

3. Procédé selon la revendication 2, caractérisé en ce que pour l'analyse de la fonction différentielle on constate si la fonction différentielle dépasse des valeurs de niveau prédéterminées à des endroits prédéterminés de la zone d'antenne et/ou dans la zone proche.

4. Procédé selon la revendication 2 ou 3, caractérisé en ce que pour l'analyse de la fonction différentielle on détermine les valeurs extrêmes de la fonction différentielle et leurs positions dans la zone d'antenne et/ou dans la zone proche.

5. Procédé selon l'une des revendications 2 à 4, caractérisé en ce que pour l'analyse de la fonction différentielle on forme l'intégrale de la fonction différentielle dans la zone d'antenne.

6. Procédé selon l'une des revendications 2 à 5, caractérisé en ce que pour l'analyse de la fonction différentielle on forme l'intégrale de la fonction différentielle pondérée de façon linéaire ou non linéaire dans la zone d'antenne.

7. Procédé selon l'une des revendications précédentes caractérisé en ce que la hauteur de l'écho effectif est déterminée et constatée dans la fonction d'écho actuelle pour savoir si cette hauteur, en fonction de la distance de mesure, se situe sur une bande prédéterminée.

8. Procédé selon la revendication 7, caractérisé en ce que la bande prédéterminée est définie selon l'équation de radar.

9. Procédé selon la revendication 7, caractérisé en ce que la bande prédéterminée est définie de façon expérimentale pour une mesure non perturbée.

10. Procédé selon l'une des revendications précédentes, caractérisé en ce que la fonction d'écho non perturbée est enregistrée avec un récipient vide.

11. Procédé selon l'une des revendications précédentes, caractérisé en ce que la fonction d'écho non perturbée est mémorisée dans une mémoire non volatile.
